# DEMANDE DE BREVET EUROPEEN

(11) **EP 1 763 029 A2**
(43) Date de publication de la demande: **14.03.2007**
(21) Numéro de dépôt: 06119840.4
(22) Date de dépôt: 30.08.2006
(51) Int. Cl.: G11B 20/00

(54) **Protection d'un contenu numérique sur un support physique**

(30) Priorité: 31.08.2005 FR 0552637
(71) Demandeur: PROTON WORLD INTERNATIONAL N.V., 1930 ZAVENTEM (BE)
(72) Inventeur: Ingels, Didier, 1367 GRAND ROSIERE (BE); Restiau, Guy, 1330 RIXENSART (BE)
(74) Mandataire: de Beaumont, Michel

(57) **Abrégé**

L'invention concerne un procédé de stockage de données numériques (D) sur un support physique équipé d'un moyen de calcul, en chiffrant les données au moyen d'un algorithme symétrique (f) avec une clé (Kc) de chiffrement indépendante de l'enregistreur et en transférant la clé de chiffrement sur ledit support ou son moyen de calcul par un algorithme asymétrique, et un procédé de lecture dans lequel, lors d'une première lecture du support physique, une clé utilisateur (Ku) est transférée au moyen de calcul par un processus de chiffrement asymétrique, une clé (Kce) chiffrée de ladite clé de chiffrement des données est calculée dans ledit moyen de calcul du support et par un algorithme symétrique (f') avec la clé utilisateur, et le moyen de chiffrement asymétrique du moyen de calcul est désactivé.

## Description

### Domaine de l'invention

La présente invention concerne de façon générale le stockage de données numériques, plus précisément de données multimédia, sur un support physique.

L'invention concerne plus particulièrement la protection de données numériques contenues sur un tel support contre des reproductions ou restitutions non autorisées, notamment par le créateur du support concerné. Par créateur du support, on entend celui qui a, le premier, procédé à l'enregistrement des données sur le support physique. Il ne s'agit donc pas nécessairement de l'auteur du contenu des données multimédia, ni du fabricant du support.

Un exemple d'application de la présente invention concerne les supports multimédia destinés à recevoir des fichiers musicaux ou image sous forme numérique.

### Exposé de l'art antérieur

On a déjà proposé de chiffrer ou crypter des données enregistrées sur un support multimédia (par exemple, un CDROM, une disquette numérique, etc.) afin que ces données ne puissent être lues que par un lecteur déterminé possédant la clé de chiffrement. Toutefois, sauf à individualiser la fabrication des supports et l'enregistrement des données chez le fabricant pour individualiser la clé en fonction de l'utilisateur, un même support peut être lu par n'importe quel lecteur possédant cette clé. Or, un objectif est précisément d'interdire la lecture du support physique par un lecteur non autorisé.

Un exemple de système de protection de copies illicites d'un support numérique quelconque est décrit dans la note "Content protection for recordable media specification" - "Introduction and common cryptographic elements", publiée par 4C-entity, Rev 0.03 le 28 juin 2000.

On a également déjà proposé d'équiper un support physique de données multimédia d'un circuit intégré (microcircuit) pourvu de moyens de calcul et de moyens de stockage d'une liste de codes d'identification de lecteurs autorisés à lire les données. Cette liste est enregistrée en même temps que les données et les lecteurs correspondants sont alors capables de déchiffrer les données stockées sur le support physique à partir du moment où le microcircuit de ce support contient leur identifiant. Une telle solution est décrite, par exemple, dans le document EP-A-1 291 868. Un inconvénient de cette solution est qu'elle requiert que les lecteurs autorisés ou habilités à lire les données contenues dans les supports physiques soient connus à l'avance de façon à pouvoir en établir la liste.

### Résumé de l'invention

La présente invention vise à pallier tout ou partie des inconvénients des systèmes de protection de données numériques contenues sur des supports physiques contre des copies ou restitution non autorisées par l'auteur ou analogue.

L'invention vise également à éviter le besoin de stocker une liste de lecteurs autorisés.

L'invention vise également à autoriser à la fois la copie des données multimédia et leur lecture à partir du moment où l'utilisateur en est autorisé.

L'invention vise également à ce que la copie du contenu multimédia ne fragilise pas la protection des données stockées.

Pour atteindre tout ou partie de ces objets ainsi que d'autres, la présente invention prévoit un procédé de stockage, par un enregistreur, de données numériques sur un support physique équipé d'un moyen de calcul, comportant, lors d'une première utilisation du support en écriture, les étapes suivantes :
chiffrer les données au moyen d'un algorithme symétrique avec une clé de chiffrement indépendante de l'enregistreur ; et
transférer la clé de chiffrement sur ledit support ou son moyen de calcul par un algorithme asymétrique.

Selon un mode de mise en oeuvre de la présente invention, ladite clé de chiffrement est dérivée d'une clé transmise à l'enregistreur au moyen d'un algorithme asymétrique.

Selon un mode de mise en oeuvre de la présente invention, le moyen de calcul comporte une fonction de chiffrement symétrique pour transmission ultérieure de la clé de chiffrement à un lecteur.

L'invention prévoit également un procédé de lecture, par un lecteur, de données numériques chiffrées au moyen d'un algorithme symétrique avec une clé de chiffrement sur un support physique équipé d'un moyen de calcul, comportant, lors d'une première lecture du support physique, les étapes suivantes:
transférer au moyen de calcul, par un processus de chiffrement asymétrique, une clé utilisateur ;
calculer, dans ledit moyen de calcul du support et par un algorithme symétrique avec la clé utilisateur, une clé chiffrée de ladite clé de chiffrement des données ; et
désactiver le moyen de chiffrement asymétrique du moyen de calcul.

Selon un mode de mise en oeuvre de la présente invention, ladite clé chiffrée est transmise au lecteur pour décodage des données chiffrées sur le support physique.

Selon un mode de mise en oeuvre de la présente invention, ladite clé utilisateur est dérivée par le lecteur de façon non réversible d'un identifiant d'un utilisateur.

L'invention prévoit également un support physique de données numériques, comportant un circuit électronique pour la mise en oeuvre du procédé de stockage et/ou du procédé de lecture de données chiffrées.

L'invention prévoit également un enregistreur de données numériques sur un support physique.

L'invention prévoit également un lecteur de données numériques sur un support physique.

L'invention prévoit également un système de stockage de données numériques, comportant :
au moins un enregistreur ; et
au moins un support physique de données numériques.

L'invention prévoit également un système de lecture de données numériques, comportant :
au moins un lecteur ; et
au moins un support physique de données numériques.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles:
la figure 1 représente, de façon très schématique, un mode de réalisation d'un support physique de données numériques selon la présente invention ;
la figure 2 représente, de façon très schématique et sous forme de blocs, un mode de réalisation d'un circuit intégré d'un support physique de la figure 1 ;
la figure 3 représente, de façon très schématique et sous forme de blocs, des éléments d'un système intervenant dans un mode de mise en oeuvre d'enregistrement de données numériques sur un support de la présente invention ;
la figure 4 illustre les échanges entre différents éléments intervenant dans le stockage de données numériques selon un mode de mise en oeuvre de la présente invention ;
la figure 5 représente, de façon très schématique et sous forme de blocs, des éléments d'un système intervenant dans un mode de mise en oeuvre d'une lecture de données numériques selon la présente invention ; et
la figure 6 illustre les échanges entre les différents constituants d'un système lors de la lecture de données numériques selon un mode de mise en oeuvre de la présente invention.

Les mêmes éléments ont été désignés par les mêmes références aux différentes figures. Pour des raisons de clarté, seuls les étapes et éléments qui sont utiles à la compréhension de l'invention ont été illustrés aux figures et seront décrits par la suite. En particulier, les calculs mis en oeuvre par les algorithmes de chiffrement et d'authentification proprement dits n'ont pas été détaillés et ne font appel qu'à des opérations courantes. De plus, les moyens d'échange de données entre les lecteurs-enregistreurs et les supports de données n'ont pas été détaillés et font là encore appel à des moyens habituels.

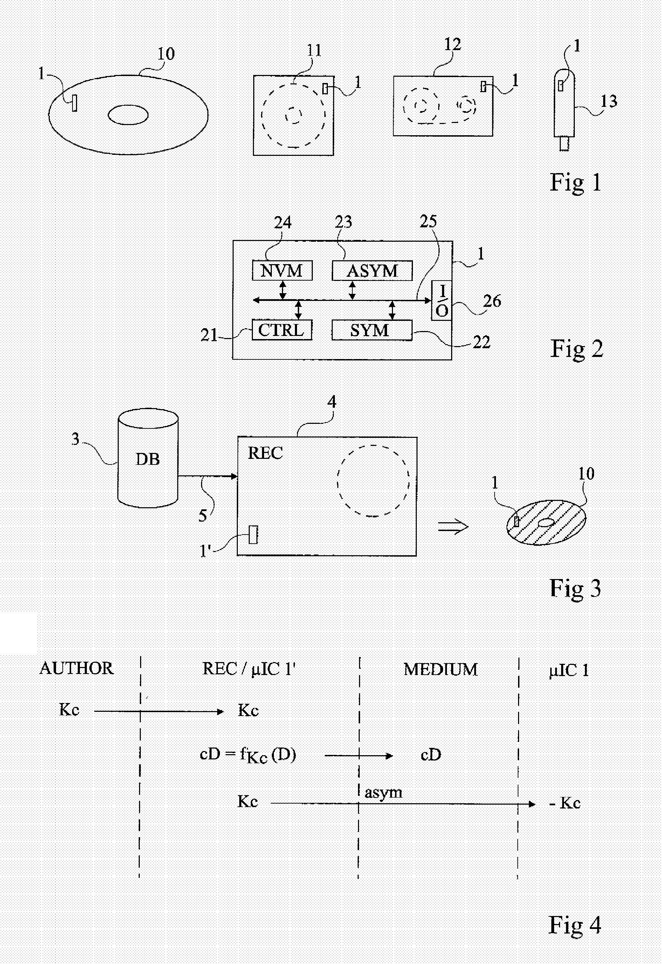

La figure 1 représente, de façon très schématique, des exemples de supports physiques de stockage de données numériques selon la présente invention.

Un support physique utilisable dans le cadre de la présente invention est constitué de n'importe quel dispositif apte au stockage de données numériques, pourvu qu'il puisse inclure ou être équipé d'un moyen de calcul. Par exemple et comme l'illustre la figure 1, il pourra s'agir d'un CDROM ou DVROM 10, d'un disque 11, d'une cassette numérique 12, d'une clé mémoire 13, etc. Ces supports sont pourvus d'un moyen de calcul, par exemple, un circuit électronique 1. Ce circuit est par exemple rapporté physiquement sur le support. Le circuit 1 est destiné à contenir au moins une quantité numérique constituant clé de chiffrement et à exécuter des calculs d'authentification et de chiffrement comme on le verra par la suite. En variante, la ou les clés sont stockées dans une zone du support physique lui-même. Le support physique et la puce peuvent être confondus, par exemple, dans le cas d'une carte à puce pourvue de mémoires numériques de capacités importantes, par exemple, une mémoire flash, ou dans le cas d'une clé mémoire intégrant des moyens de calcul.

La figure 2 représente, de façon très schématique et sous forme de blocs, un exemple de circuit électronique 1 (microcircuit) du type équipant les supports physiques auxquels s'applique la présente invention. Le circuit 1 est de préférence contenu dans une seule puce de circuit intégré. Il comporte un circuit 21 de commande (CTRL) et de calcul de type unité centrale de traitement, au moins une fonction 22 (SYM) de mise en oeuvre (matérielle et/ou logicielle) d'un algorithme de chiffrement de type symétrique à partage de clé sans transmission de celle-ci, au moins une fonction 23 (ASYM) de mise en oeuvre (matérielle et/ou logicielle) d'un algorithme asymétrique pour authentification et transfert de secret (clé de chiffrement notamment) et, de préférence, un élément 24 de stockage non volatile (NVM) destiné à contenir les quantités numériques représentant des clés si celles-ci ne sont pas directement contenues dans le support physique.

Un algorithme symétrique, également appelé à clé secrète, requiert que la clé (quantité numérique) utilisée pour chiffrer des données numériques serve à leur déchiffrement. Un tel algorithme requiert donc que le codeur et le décodeur soit en possession de la même clé. Un algorithme symétrique est généralement plus rapide d'exécution qu'un algorithme asymétrique.

Un algorithme asymétrique, également appelé à clé publique par opposition à l'algorithme symétrique à clé secrète, utilise des clés différentes pour chiffrer et déchiffrer de mêmes données numériques. Les données sont généralement chiffrées avec une clé publique et déchiffrées avec une clé, dite privée, connue du seul destinataire. Ces algorithmes sont souvent utilisés dans le cadre d'un système tripartite (émetteur, récepteur, tiers de confiance) et permettent alors de combiner le chiffrement à une authentification des parties.

Les différents éléments du circuit 1 communiquent au moyen d'un ou plusieurs bus 25 de données, d'adresses et de commandes, entre eux et avec un élément 26 d'entrée/sortie (I/O) de communication avec l'extérieur du circuit 1, avec ou sans contact.

La figure 3 illustre, de façon très schématique et sous forme de blocs, un mode de mise en oeuvre d'un enregistrement initial de données numériques sur un support physique 10 selon la présente invention.

Des données numériques à stocker (par exemple, des fichiers audio ou vidéo) sont initialement contenus dans un élément source, par exemple, de type base de données 3 (DB). Il pourra également s'agir d'une source de données distante provenant d'un réseau numérique privé (intranet) ou public (internet) ou de tout autre élément contenant des données numériques multimédia. Il pourra même s'agir d'un support physique de stockage 10, 11, 12 ou 13 du type de ceux mis en oeuvre par la présente invention.

Pour stocker des données numériques contenues dans l'élément source 3 sur un support physique de l'invention, on utilise un enregistreur 4 (REC) ou un lecteur-enregistreur capable de recevoir, sur une liaison 5, les données contenues dans l'élément source 3, et comprenant des moyens de lectureécriture (non détaillés) d'au moins un type de supports physiques. L'enregistreur 4 est également équipé d'un circuit électronique 1', par exemple un circuit (microcircuit) similaire au circuit 1 décrit en relation avec la figure 2, et possède donc des moyens (matériels et/ou logiciels) de calcul et de mise en oeuvre d'algorithmes symétriques et asymétriques.

La figure 4 illustre un mode de mise en oeuvre de l'invention pour le stockage initial de données multimédia de façon chiffrée sur un support (MEDIUM) vierge. Le créateur du support ou concepteur (AUTHOR) initialise le système d'enregistrement (REC) en introduisant dans celui-ci une clé Kc d'un mécanisme symétrique. Le cas échéant, ce secret symétrique Kc est dérivé d'une autre clé. Selon le niveau de sécurité de la liaison entre le dispositif d'introduction (clavier, carte à puce, etc.) et l'enregistreur, la transmission peut faire appel à une clé transitoire issue d'un protocole d'authentification asymétrique.

L'enregistreur REC contenant le circuit 1' (µIC) utilise la clé Kc pour chiffrer les données multimédia D au moyen d'une fonction f_{Kc} de chiffrement symétrique pour obtenir un contenu numérique protégé cD (cD = f_{Kc}(D)). Ce contenu cD est alors transféré sur le support physique MEDIUM. Par ailleurs, l'enregistreur transmet le secret Kc au microcircuit (µIC) 1 du support physique. Cette transmission s'effectue en utilisant un secret transitoire (non représenté), dérivé d'une authentification asymétrique asym entre l'enregistreur et le microcircuit 1. Une fois qu'il a reçu la clé Kc, le microcircuit 1 du support n'est plus à même de recevoir un nouveau secret de même type. Cette fonctionnalité est invalidée de façon matérielle et/ou logicielle (par exemple, par programmation d'un élément non volatile à programmation irréversible conditionnant l'exécution de la fonction). Le support physique peut donc être considéré comme appartenant au créateur.

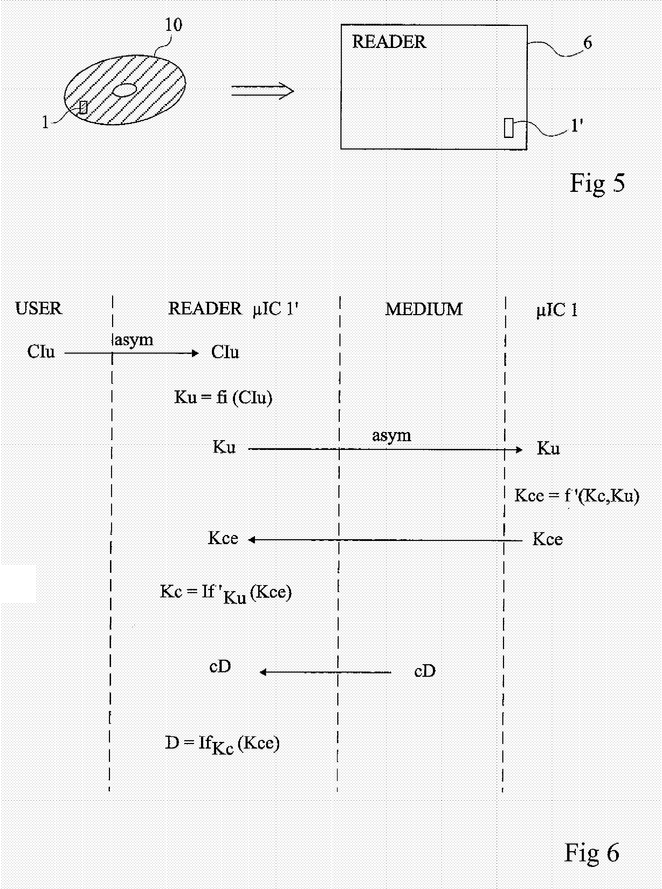

La figure 5 illustre, de façon schématique et sous forme de blocs, des éléments d'un système de lecture selon un mode de réalisation de la présente invention. Le support physique (par exemple 10) contenant les données chiffrées cD et dont le microcircuit 1 contient la clé Kc est introduit dans un lecteur 6 (READER) ou un dispositif de lecture/écriture. Ce lecteur comporte, comme l'enregistreur 4 (figure 3), des moyens (par exemple, sous la forme d'un circuit électronique 1') de calcul et de mise en oeuvre (logicielle et/ou matérielle) d'algorithmes asymétriques et symétriques.

De préférence, les lecteurs et enregistreurs utilisés par l'invention sont de type à module à confiance sécurisé (TPM ou Trusted Plateform Module). Ils comportent le cas échéant des moyens de communication avec un ou plusieurs tiers de confiance (non représentés) pour des besoins d'authentification et d'obtention de clés transitoires.

Selon un mode de réalisation préféré de l'invention, une première lecture d'un support physique s'accompagne d'une personnalisation de ce support pour l'utilisateur concerné.

La figure 6 illustre les échanges entre les différents constituants d'un système de lecture lors d'une première lecture d'un support numérique protégé selon l'invention.

L'utilisateur USER initialise son système de lecture (et de copie) READER au moyen d'un code d'identification CIu. Ce code d'identification est, par exemple, saisi sur un clavier, ou contenu dans une carte à puce lisible par le lecteur avec ou sans contact. Le code d'identification CIu de l'utilisateur est stocké à demeure dans le lecteur ou, en variante, doit être introduit à chaque nouvelle utilisation. Comme pour le transfert de la clé Kc entre le créateur et l'enregistreur (figure 3), selon le niveau de sécurité de la liaison entre l'utilisateur et le lecteur, le code CIu est transmis soit directement soit par un algorithme asymétrique.

Le lecteur READER transforme le code d'identification CIu en une clé d'authentification symétrique Ku par une fonction irréversible fi (Ku = fi(CIu)).

Lorsqu'un support physique MEDIUM contenant des données codées est introduit pour une première fois dans un lecteur, la clé Ku affectée à l'utilisateur est transmise au microcircuit 1 du support physique au moyen d'un processus asymétrique. Le secret Ku est donc transmis au microcircuit 1 au moyen d'un secret transitoire provenant du processus asymétrique. Le processus asymétrique sert également à authentifier le média et le lecteur comme appartenant à un même domaine. Cela permet notamment de négocier une clé de session à chaque échange asymétrique entre les deux éléments.

Dès la réception du secret Ku, le microcircuit 1 passe dans un mode de fonction dit propriétaire dans lequel les moyens de chiffrement asymétriques sont invalidés (de façon logicielle ou matérielle), de sorte que le secret Kc avec lequel ont été codées les données numériques sur le support ne peut plus être transmis qu'en mode symétrique.

Cela revient à affecter le support enregistré, à l'utilisateur identifié par la clé Ku.

Pour la lecture proprement dite, le microcircuit 1 chiffre la clé Kc au moyen de la clé Ku par une fonction symétrique f' (identique ou différente de la fonction f) à partage de clé sans transmission de celle-ci (Kce = f'_{Ku}(Kc)). Le résultat Kce est transmis au lecteur (à son microcircuit 1') qui, possédant la clé Ku et connaissant l'algorithme inverse If' de l'algorithme de chiffrement symétrique f' est capable d'en déduire la clé Kc avec laquelle ont été chiffrées les données sur le support. Les données chiffrées cD sont transmises du support vers le lecteur qui, connaissant la fonction inverse If de celle (f) avec laquelle elles ont été chiffrées, est capable de les restituer à partir de la clé Kc et des données cD (D =If_{Kc}(CD)).

Selon le mode de mise en oeuvre exposé, les microcircuits 1 et 1' des différents supports et lecteurs possèdent chacun un secret asymétrique de façon à pouvoir s'authentifier mutuellement. Dès cette authentification terminée, il échange un secret symétrique codé avec ce secret asymétrique (transmission de la clé Ku). Dès que ces deux circuits sont en possession du secret symétrique Ku, ils désactivent le mode asymétrique qu'ils comportent.

Si le support est introduit dans un lecteur ne possédant pas la clé Ku, mais une clé Ku' d'un autre utilisateur, ce lecteur ne parvient pas à décoder la clé Kc dans la mesure où il ne possède pas le secret Ku. Or, le microcircuit 1 du support physique a invalidé ses moyens de chiffrement asymétrique, de sorte qu'il n'est pas capable de réinitialiser la clé d'utilisateur à laquelle il est associé.

De préférence, un utilisateur autorisé peut toutefois introduire son identifiant CIu dans le lecteur tiers. Cet identifiant est transformé par ce lecteur en clé Ku qui sera sauvegardée, de préférence dans une zone de travail éphémère. Le lecteur tiers peut alors déchiffrer les données de la manière décrite ci-dessus en relation avec la figure 6. Dès la fin de la lecture ou réinitialisation du lecteur, la zone éphémère de stockage de la clé Ku est effacée.

Pour la réalisation d'une copie des données chiffrées sur un autre support physique, on utilise un support vierge contenant un microcircuit 1 dans lequel le processus asymétrique n'a pas encore été invalidé. En introduisant ce support dans un enregistreur autorisé par l'authentification de l'utilisateur à partir de son identifiant CIu, la clé Kc est transmise au microcircuit 1 par le processus asymétrique. Puis, les données codées par la clé Kc sont transférées au nouveau support. Enfin, la clé Ku est transmise au microcircuit 1 par le processus asymétrique. Dès que cette clé Ku est présente dans le microcircuit 1 du support, ces fonctions asymétriques sont invalidées.

Comme la clé Kc, de préférence dérivée de la clé du créateur, est connue du seul microcircuit 1 associé au support physique, la copie des données cD codées ne permet pas à un utilisateur non autorisé de les lire.

Le fait de transférer la clé de l'utilisateur Ku sur le support physique contenant les données protégées évite non seulement les listes de lecteurs autorisés mais permet également à l'utilisateur autorisé d'effectuer les copies qu'il souhaite de ce support sachant qu'il sera le seul à pouvoir les lire. De plus, cela permet d'individualiser les différents supports physiques de sorte que la connaissance d'une clé d'un support ne permet pas à un fraudeur éventuel de lire d'autres supports qui auraient été codés avec une autre clé. Cet avantage est obtenu en diversifiant la clé Kc de l'auteur (figure 4) pour son stockage sur le microcircuit des supports d'enregistrement.

Bien entendu, la présente invention est susceptible de diverses variantes et modifications qui apparaîtront à l'homme de l'art. En particulier, la mise en oeuvre pratique des algorithmes de chiffrement asymétriques et symétriques utilisables par l'invention est à la portée de l'homme du métier à partir des indications fonctionnelles données ci-dessus.

L'invention pourra être mise en oeuvre avec tout algorithme de chiffrement symétrique à partage de clé sans transmission de celle-ci, par exemple, tel que décrit dans le document FR-A-2 716 058. On peut aussi utiliser un algorithme connu sous le nom Diffie-Helmann et décrit, par exemple, dans l'ouvrage "Applied Cryptography" de B. Schneier, publié par Wiley en 1996, pages 513 à 519, ou dans le document US-A-4 200 770. On pourra également utiliser un algorithme connu sous le nom DES (Data Encryption Standard) et décrit, par exemple, dans l'ouvrage Applied Cryptography susmentionné, pages 265 à 301.

N'importe quel algorithme asymétrique pourra être utilisé pour le transfert des clés. Par exemple, on pourra avoir recours à un algorithme connu sous le nom RSA tel que décrit dans l'ouvrage Applied Cryptography susmentionné, pages 466 à 474, et dans le document US-A-4 405 829.

Le chiffrement des données multimédia stockées sur le support physique au moyen de la clé unique Kc pourra être effectué au moyen de n'importe quel algorithme symétrique susmentionné ou encore l'algorithme décrit dans l'article "MPEG Video Encryption In Real Time Using Secret Key Cryptography" de C. Shi, S-Y. Wang et B. Bhargava, publié par le "Department Of Computer Science Of Purdue University" en 1999.

## Revendications

1. Procédé de lecture, par un lecteur (6), de données numériques chiffrées (cD) au moyen d'un algorithme symétrique (f) avec une clé (Kc) de chiffrement sur un support physique (10, 11, 12, 13) équipé d'un moyen de calcul (1), **caractérisé en ce qu'**il comporte, lors d'une première lecture du support physique, les étapes suivantes :
transférer au moyen de calcul, par un processus de chiffrement asymétrique, une clé utilisateur (Ku) ;
calculer, dans ledit moyen de calcul du support et par un algorithme symétrique (f') avec la clé utilisateur, une clé (Kce) chiffrée de ladite clé de chiffrement des données ; et
désactiver le moyen de chiffrement asymétrique du moyen de calcul.

2. Procédé selon la revendication 1, dans lequel ladite clé chiffrée (Kce) est transmise au lecteur pour décodage des données chiffrées sur le support physique.

3. Procédé selon la revendication 1 ou 2, dans lequel ladite clé utilisateur est dérivée par le lecteur de façon non réversible d'un identifiant (CIu) d'un utilisateur.

4. Support physique (10, 11, 12, 13) de données numériques, **caractérisé en ce qu'**il comporte un circuit électronique (1) pour la mise en oeuvre du procédé de lecture selon l'une quelconque des revendications 1 à 3.

5. Lecteur (6) de données numériques sur un support physique, **caractérisé en ce qu'**il comporte des moyens (1') pour mettre en oeuvre le procédé de lecture selon l'une quelconque des revendications 1 à 3.

6. Système de lecture de données numériques, **caractérisé en ce qu'**il comporte :
au moins un lecteur conforme à la revendication 5 ; et
au moins un support physique conforme à la revendication 4.
